(19) Europäisches Patentamt
European Patent Office
Office européen des brevets

(11) **EP 4 176 176 B1**

(12) **EUROPÄISCHE PATENTSCHRIFT**

(45) Veröffentlichungstag und Bekanntmachung des Hinweises auf die Patenterteilung:
**25.09.2024  Patentblatt 2024/39**

(21) Anmeldenummer: **21737539.3**

(22) Anmeldetag: **24.06.2021**

(51) Internationale Patentklassifikation (IPC):
*F15B 13/04* (2006.01)  *F15B 13/042* (2006.01)
*F16K 11/00* (2006.01)  *F15B 20/00* (2006.01)
*E02F 9/22* (2006.01)  *E02F 3/96* (2006.01)
*B25D 9/00* (2006.01)

(52) Gemeinsame Patentklassifikation (CPC):
**F15B 13/0402; F15B 13/042; F15B 20/00;
F16K 11/0716; F16K 31/363;** B25D 9/20;
E02F 3/3654; E02F 3/966; E02F 9/2267;
F15B 2013/041; F15B 2211/8643; F15B 2211/865

(86) Internationale Anmeldenummer:
**PCT/AT2021/060221**

(87) Internationale Veröffentlichungsnummer:
**WO 2022/000008 (06.01.2022 Gazette 2022/01)**

(54) **SCHALTMITTEL VON ARBEITSFLUID**

SWITCHING MEANS OF WORKING FLUID

MOYEN DE COMMUTATION DE FLUIDE DE TRAVAIL

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **01.07.2020  AT 505562020**

(43) Veröffentlichungstag der Anmeldung:
**10.05.2023  Patentblatt 2023/19**

(73) Patentinhaber: **BBG Baugeräte GmbH
8605 Kapfenberg (AT)**

(72) Erfinder: **KAINDLBAUER, Stefan
8192 Strallegg (AT)**

(74) Vertreter: **Wildhack & Jellinek Patentanwälte
Patentanwälte OG
Landstraßer Hauptstraße 50
1030 Wien (AT)**

(56) Entgegenhaltungen:
**WO-A1-2013/037356      DE-B- 1 229 804
KR-A- 950 019 030**

**Beschreibung**

Die Erfindung bezieht sich auf ein Schaltmittel zur Polung der Zu- und Rückführung eines Arbeitsfluids für Verbraucher unabhängig von einer Anspeisungspolarität.

Aus der WO 2013/037356 A1 ist ein Schaltmittel zur Polung der Zu- und Rückführung eines Arbeitsmittels für Verbraucher unabhängig von einer Anspeisungspolarität bekannt. Das Schaltmittel weist einen Anschlussteil, einen Ventilkörper mit einem oder mehreren Anschlüssen für einen Zulauf und einer Abführung des Arbeitsmittels auf.

Hydraulische Verbraucher, wie beispielsweise hydraulische Schlagwerke, weisen gegebenenfalls Hochdruckanschlüsse für Arbeitsfluid und Anschlüsse zur Rückführung desselben mit gleichen Verbindungsmitteln wie gleichartigen Gewindeteilen und dergleichen auf. Bei einer Installation oder insbesondere bei einem Austausch von hydraulischen Schlagwerken zur Reparatur oder zu Servicezwecken im praktischen Einsatz können in nachteiliger Weise Verwechslungen der Anschlüsse von Zu- und Rückführungen von Arbeitsfluid erfolgen.

Derartige Schlagwerke und Verbraucher weisen zumeist einen höchstzulässigen Rücklaufdruck beziehungsweise maximalen Druck im Bereich der Abführung des Arbeitsmediums von 8 bar auf, so dass bei Fehlanschlüssen mit einer Hochdruckbeaufschlagung dieses Rücklaufbereiches Funktionsstörungen der Arbeitsweise oder Beschädigungen eines Verbrauchers erfolgen können.

Es ist nun Aufgabe der vorliegenden Erfindung, diese Nachteile zu beseitigen und ein Schaltmittel zu schaffen, welches unabhängig von einer Polung der Anschlüsse eine vorgesehene Anschlusspolarität eines Verbrauchers sicherstellt.

Diese Aufgabe wird erfindungsgemäß durch ein Schaltmittel gemäß Anspruch 1 gelöst, gebildet mit einem Anschlussteil umfassend Anspeisepole für die Herstellung der Anspeisungspolarität, einem Ventilkörper mit jeweils einem oder mehreren Anschlüssen für einen Zulauf und einer Abführung des Arbeitsfluids mit einem rohrförmigen, im Ventilkörper axial in Grenzen verschiebbaren Schaltteil mit radialen Bohrungen in zwei axial distanzierten Ebenen mit einem Basisteil und einem Topteil, jeweils die Verschiebungsgrenzen für das Schaltteil bildend, wobei im Bereich der Innenoberfläche des Ventilkörpers und der Außenoberfläche des Schaltteiles ein erster, zweiter, dritter, vierter und fünfter kooperierender Ringraum zur jeweiligen Führung von Arbeitsfluid ausgeformt sind und eine am Schaltteil zum Topteil hin mit Arbeitsfluid beaufschlagbare zweite, dritte, fünfte und siebente Ringfläche und am Schaltteil eine zum Basisteil hin beaufschlagbare erste, vierte und sechste Ringfläche und bestimmte Größenrelationen aufweisen mit der Maßgabe, dass von dem ersten Ringraum und dem dritten Ringraum eine permanente fluidale Verbindung vorliegt.

Eine erfindungsgemäße einseitige Limitierung der Größenrelationen der zum Topteil und zum Basisteil hin mit Hochdruckfluid beaufschlagbaren Ringflächen des Schaltteiles hat den Vorteil, dass bei größer werdender Ungleichheit der Werte die Intensität einer hydraulischen Schaltung einer erforderlichen Polarität der Anspeisung für einen Verbraucher erhöht wird. Mit anderen Worten: Ein sogenannter Schaltstoss bei einer Erstellung einer erforderlichen Anspeisungspolarität für einen Verbraucher kann mittels einer Wahl der Größenrelationen der axialen Ringflächen des Schaltteiles eingestellt werden.

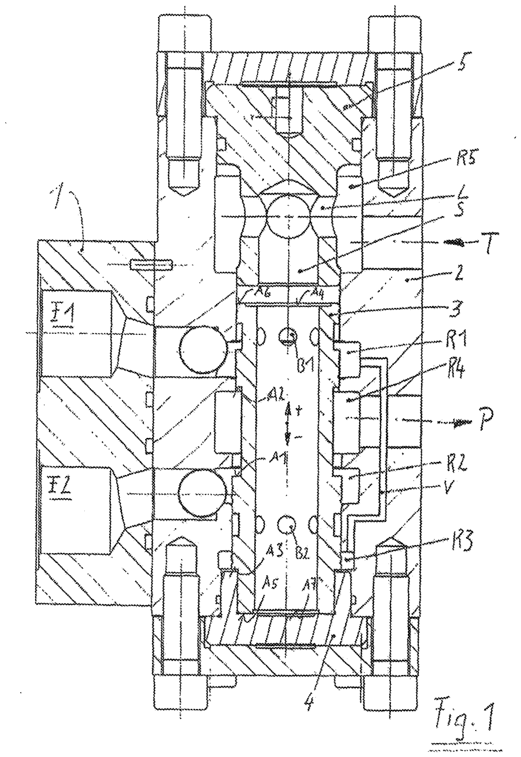

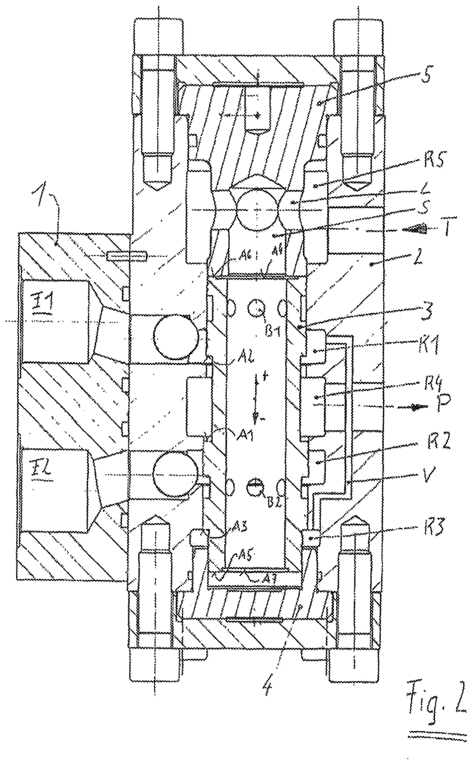

Ein konstruktiver Aufbau eines erfindungsgemäßen Schaltmittels ist den Patentansprüchen und den prinzipiellen Zeichnungen gemäß Fig.1 und Fig. 2 zu entnehmen.

Zur Erleichterung des Überblickes hinsichtlich der Funktionsteile des Schaltmittels soll nachfolgende Bezugszeichenliste dienen.

Es stellen dar:

| 1 | Anschlussteil |
| E1, E2 | Anschlüsse |
| P | Hochdruckzulauf zum Verbraucher |
| T | Abführung von Arbeitsfluid vom Verbraucher |
| 2 | Ventilkörper |
| 3 | Schaltteil |
| 4 | Basisteil |
| 5 | Topteil |
| R1 | Ringraum verbunden mit E1 |
| R2 | Ringraum verbunden mit E2 |
| R3 | Ringraum verbunden mit R1^ |
| R4 | Ringraum verbunden mit P |
| R5 | Ringraum verbunden mit T |
| V | Permanente fluidale Verbindung |

| A | Ringflächen am Schaltteil 3, beaufschlagbar mit Hochdruckfluid in Richtung der Teile |
| A1 | Richtung Teil 4 |
| A2 | Richtung Teil 5 |
| A3 | Richtung Teil 5 |
| A4 + A6 | Ringflächen Richtung Teil 4 |
| A5 + A7 | Ringflächen Richtung Teil 5 |
| B1 | Bohrung in 3 zu R1 |
| B2 | Bohrung in 3 zu R2 |
| S | Axiales Sackloch in 5 |
| L | Einleitbohrung in Lochwand S von 5 |

Varianten bei unterschiedlicher Anspeisungspolarität eines vor einem Verbraucher angeordneten erfindungsgemäßen Schaltmittels zeigen prinzipiell die graphischen Darstellungen.

Liegt im Anschlussteil 1 Hochdruckfluid am Anschluss E2 des Anschlussteiles 1 an (Fig.1), so besteht bei einer Positionierung eines Schaltteiles 3 am Basisteil 4 eine Verbindung zum Ringraum R2. Dieser Ringraum 2 hat zwischen Schaltteil 3 und Ventilkörper 2 einen koaxialen Durchlass zum Ringraum R4 und somit zum Hochdruckzulauf eines Verbrauchers

Eine Abführung T von Arbeitsfluid vom Verbraucher ist im Ventilkörper 2 mit einem Ringraum R5 verbunden. In den Ringraum R5 ragt ein Topteil 5 mit einem axialen Sackloch S und Einleitbohrungen L durch die Lochwand, welche Hohlräume eine Führung des Hydraulikfluids in ein rohrförmiges Schaltteil 3 bilden. Das am Basisteil 4 positionierte Schaltteil 3 weist in zwei axial distanzierten Ebenen radiale Bohrungen B1 und B2 auf, von welchen lediglich die Bohrung B1 eine Verbindung zum Ringraum R1 und weiter zum Anschluss E1 für eine Rückführung des Arbeitsfluids mit niedrigem Druck haben.

Es folgt nun (Fig. 2) eine Einleitung von Hochdruckfluid am Anschluss E1. So ist bei einem Anschlag des Schaltteiles 3 am Topteil 5 eine Weiterleitung des Hochdruckfluids in den Ringraum R1 und von diesem durch einen koaxialen Durchlass zum Ringraum R4 und folglich zum Hochdruckzulauf P eines Verbrauchers gegeben.

Arbeitsfluid mit geringem Druck in einer Abführung T vom Verbraucher kann in einen Ringraum R5 und weiter durch Einleitbohrungen L in ein axiales Sackloch S eines Topteiles 5 und folglich in ein rohrförmiges Schaltteil 3 geführt werden. In einem am Topteil 5 anliegenden Schaltteil 3 ergeben die Bohrungen B2 eine Verbindung in den Ringraum R2 und in der Folge eine solche um Anschluss E2 für eine Rückführung des Arbeitsfluids vom Verbraucher.

Eine Positionierung des Schaltteiles 3 am Basisteil 4 ist durch eine Beaufschlagung der Ringflächen A1 minus der Ringfläche A2 mit Hochdruckfluid P bei Berücksichtigung der Ringflächen (A4 + A6) minus der Ringflächen (A3 + A5 + A7) mit Niederdruck vom Ableitungsfluid begründet.

Eine Positionierung des Schaltteiles 3 am Topteil ist durch eine Beaufschlagung der Ringflächen (A2 + A3) minus der Ringfläche A1 mit Hochdruckfluid P bei Berücksichtigung der Ringflächen (A5 + A7) minus der Ringflächen (A6 + A4) mit Niederdruck vom Ableitungsfluid begründet.

**Patentansprüche**

1. Schaltmittel zur Polung der Zu- und Rückführung eines Arbeitsfluids für Verbraucher, unabhängig von einer unterschiedlichen Anspeisungspolarität (E1, E2), gebildet mit einem Anschlussteil (1) umfassend Anspeisepole (E1, E2) für die Herstellung der Anspeisungspolarität (E1, E2), einem Ventilkörper (2) mit jeweils einem oder mehreren Anschlüssen für einen Zulauf (P) und einer Abführung (T) des Arbeitsfluids mit einem rohrförmigen, im Ventilkörper (2) axial in Grenzen verschiebbaren Schaltteil (3) mit radialen Bohrungen (B1, B2) in zwei axial distanzierten Ebenen mit einem Basisteil (4) und einem Topteil (5), jeweils die Verschiebungsgrenzen für das Schaltteil (3) bildend, wobei im Bereich der Innenoberfläche des Ventilkörpers (2) und der Außenoberfläche des Schaltteiles (3) ein erster (R1), zweiter (R2), dritter (R3), vierter (R4) und fünfter (R5) kooperierender Ringraum zur jeweiligen Führung von Arbeitsfluid ausgeformt sind und eine am Schaltteil (3) zum Topteil (5) hin mit Arbeitsfluid beaufschlagbare zweite (A2), dritte (A3), fünfte (A5) und siebente (A7) Ringfläche und am Schaltteil (3) eine zum Basisteil (4) hin beaufschlagbare erste (A1), vierte (A4) und sechste (A6) Ringfläche bei permanenter fluidaler Verbindung (V) der ersten (R1) und dritten (R3) Ringräume folgende Größenrelationen aufweisen:
   I.

zweite Ringfläche (A2) = dritte Ringfläche (A3) > 0,5 x erste Ringfläche (A1)

II.

$$\text{vierte Ringfläche (A4)} > \text{fünfte Ringfläche (A5)} + \text{siebente Ringfläche (A7)}$$

III. dritte Ringfläche (A3) + siebente Ringfläche (A7) > vierte Ringfläche (A4) + sechste Ringfläche (A6) IV. erste Ringfläche (A1) = 2 x zweite Ringfläche (A2) - vierte Ringfläche (A4) + fünfte Ringfläche (A5) - sechste Ringfläche (A6) + siebente Ringfläche (A7)

**2.** Schaltmittel nach Anspruch 1, **dadurch gekennzeichnet, dass** das im Ventilkörper (2) bewegbare Schaltteil (3) abhängig von der Anspeisungspolarität (E1, E2) auf Grund der Größenrelationen der mit Hochdruckfluid beaufschlagten ersten (A1), zweiten (A2), dritten (A3), vierten (A4), fünften (A5), sechsten (A6) bis siebenten (A7) Ringflächen am Basisteil (4) oder am Topteil (5) positioniert ist und derart eine Führung des Arbeitsfluids im Schaltteil (3) bewirkt, welche eine jeweils gleichartige Polung von Zu- und Abführung (P, T) für Verbraucher sicherstellt.

**3.** Schaltmittel nach einem der Ansprüche 1 oder 2, **dadurch gekennzeichnet, dass** im Ventilkörper (2) der Zulauf (P) von Arbeitsfluid für Verbraucher mit dem vierten Ringraum (R4) in Verbindung steht, welcher vierte Ringraum (R4) in axialer Richtung zwischen dem ersten (R1) und zweiten (R2) Ringraum der möglichen Anspeisepole (E1, E2) positioniert ist und eine jeweilige Lage des Schaltteiles (3) eine Fluidverbindung vom Hochdruck- bzw. aktuellen Zuführungspol (E1, E2) zum Verbraucherzulauf (P) sowie eine Abführung (T) zum Rückführungspol sicherstellt.

**4.** Schaltmittel nach einem der Ansprüche 1 bis 3, **dadurch gekennzeichnet, dass** der mit einem Anspeisepol (E1) verbundene erste Ringraum (R1) die permanente fluidale Verbindung (V) im Ventilkörper (2) mit dem dritten Ringraum (R3) zwischen Ventilkörper (2) und Schaltteil (3) aufweist.

**5.** Schaltmittel nach einem der Ansprüche 1 bis 4, **dadurch gekennzeichnet, dass** der mit einem Anspeisepol (E2) verbundene zweite Ringraum (R2) die zum Basisteil (4) hin beaufschlagbare erste Ringfläche (A1) des Schaltteiles (3) aufweist, wenn das Schaltteil (3) am Basisteil (4) positioniert ist.

**6.** Schaltmittel nach einem der Ansprüche 1 bis 5, **dadurch gekennzeichnet, dass** für die Abführung (T) des Arbeitsfluids vom Verbraucher im Ventilkörper (2) der fünfte Ringraum (R5) ausgeformt ist, in welchem das Topteil (5) mit axial einem Sackloch (S) und radial mit Einleitbohrungen (L) in die Lochwand ragt, wobei die Stirnseite der Lochwand eine Verschiebungsgrenze des rohrförmigen Schaltteiles (3) darstellt und das Schaltteil (3) in den Endlagen mittels aktivierten Radialbohrungen (B1, B2) eine Fluidverbindung mit dem ersten (R1) oder zweiten (R2) Ringraum und somit in den aktuellen Rückführungspol sicherstellt.

**7.** Schaltteil nach den vorgeordneten Ansprüchen, **dadurch gekennzeichnet, dass** die Ringräume folgende Größenrelation aufweisen:

$$\text{erste Ringfläche (A1)} = 1$$

$$\text{zweite Ringfläche (A2)} = \text{dritte Ringfläche (A3)} \approx 2/3 \text{ erste Ringfläche (A1)}$$

$$\text{vierte Ringfläche (A4)} = 1{,}63 \text{ x erste Ringfläche (A1)}$$

$$\text{fünfte Ringfläche (A5)} = \text{sechste Ringfläche (A6)} \approx 1/4 \text{ erste Ringfläche (A1)}$$

siebente Ringfläche (A7) = 1,30 x erste Ringfläche (A1)

**Claims**

1. Switching means for polarity switching of the feed and return of a working fluid for consumers, irrespective of a different supply polarity (E1, E2), formed with a connection part (1) comprising supply poles (E1, E2) for producing the supply polarity (E1, E2), a valve body (2) with one or more connections each for a feed (P) and a discharge (T) of the working fluid, with a tubular switching part (3) axially displaceable within limits in the valve body (2), with radial bores (B1, B2) in two axially spaced planes, with a base part (4) and a top part (5), each forming the displacement limits for the switching part (3), wherein, in the region of the inner surface of the valve body (2) and the outer surface of the switching part (3), a first (R1), second (R2), third (R3), fourth (R4) and fifth (R5) cooperating annular space for respectively conducting working fluid are formed, and a second (A2), third (A3), fifth (A5) and seventh (A7) annular surface, which can be acted upon by working fluid on the switching part (3) towards the top part (5), and a first (A1), fourth (A4) and sixth (A6) annular surface which can be acted upon on the switching part (3) towards the base part (4), have the following size relations when there is a permanent fluidic connection (V) of the first (R1) and third (R3) annular spaces:

   I. second annular surface (A2) = third annular surface (A3) > 0.5 x first annular surface (A1) II. fourth annular surface (A4) > fifth annular surface (A5) + seventh annular surface (A7) III. third annular surface (A3) + seventh annular surface (A7) > fourth annular surface (A4) + sixth annular surface (A6) IV. first annular surface (A1) = 2 x second annular surface (A2) - fourth annular surface (A4) + fifth annular surface (A5) - sixth annular surface (A6) + seventh annular surface (A7)

2. Switching means according to claim 1, **characterised in that** the switching part (3) movable in the valve body (2) is positioned depending on the supply polarity (E1, E2) on the basis of the size relations of the first (A1), second (A2), third (A3), fourth (A4), fifth (A5), sixth (A6) to seventh (A7) annular surfaces on the base part (4) or on the top part (5) and thus brings about conducting of the working fluid in the switching part (3), which ensures that the polarity of the supply and discharge (P, T) for consumers is identical in each case.

3. Switching means according to any one of claims 1 or 2, **characterised in that** in the valve body (2) the feed (P) of working fluid for consumers is connected to the fourth annular space (R4), which fourth annular space (R4) is positioned in the axial direction between the first (R1) and second (R2) annular spaces of the possible supply poles (E1, E2) and a respective position of the switching part (3) ensures a fluidic connection from the high-pressure or current feed pole (E1, E2) to the consumer feed (P) and a discharge (T) to the return pole.

4. Switching means according to any one of claims 1 to 3, **characterised in that** the first annular space (R1) connected to a supply pole (E1) has the permanent fluidic connection (V) in the valve body (2) to the third annular space (R3) between the valve body (2) and the switching part (3).

5. Switching means according to any one of claims 1 to 4, **characterised in that** the second annular space (R2) connected to a supply pole (E2) has the first annular surface (A1) of the switching part (3), which first annular surface can be acted upon towards the base part (4), when the switching part (3) is positioned on the base part (4).

6. Switching means according to any one of claims 1 to 5, **characterised in that** the fifth annular space (R5) is formed in the valve body (2) for discharge (T) of the working fluid from the consumer, in which fifth annular space the top part (5) projects into the hole wall with an axial blind hole (S) and radially with inlet bores (L), wherein the front side of the hole wall constitutes a displacement limit of the tubular switching part (3) and the switching part (3) ensures a fluidic connection to the first (R1) or second (R2) annular space, and thus into the current return pole, in the end positions by means of activated radial bores (B1, B2).

7. Switching part according to the preceding claims, **characterised in that** the annular spaces have the following size relation:

$$\text{first annular surface (A1)} = 1$$

$$\text{second annular surface (A2)} = \text{third annular surface (A3)} \approx 2/3 \text{ first annular surface (A1)}$$

$$\text{fourth annular surface (A4)} = 1.63 \text{ x first annular surface (A1)}$$

$$\text{fifth annular surface (A5)} = \text{sixth annular surface (A6)} \approx 1/4 \text{ first annular surface (A1)}$$

$$\text{seventh annular surface (A7)} = 1.30 \text{ x first annular surface (A1)}$$

**Revendications**

1. Moyen de commutation pour la polarisation de l'alimentation et du retour d'un fluide de travail pour des consommateurs, indépendamment d'une polarité d'alimentation (E1, E2) différente, formé avec une partie de raccordement (1) comprenant des pôles d'alimentation (E1, E2) pour l'établissement de la polarité d'alimentation (E1, E2), un corps de soupape (2) avec respectivement un ou plusieurs raccordements pour une alimentation (P) et une évacuation (T) du fluide de travail avec une partie de commutation (3) tubulaire pouvant être déplacée axialement dans certaines limites dans le corps de soupape (2) avec des alésages (B1, B2) radiaux dans deux plans axialement distancés avec une partie de base (4) et une partie supérieure (5), formant respectivement les limites de déplacement pour la partie de commutation (3), dans lequel un premier (R1), deuxième (R2), troisième (R3), quatrième (R4) et cinquième (R5) espaces annulaires coopérant sont formés dans la zone de la surface intérieure du corps de soupape (2) et de la surface extérieure de la partie de commutation (3) pour le guidage respectif du fluide de travail, et une deuxième (A2), troisième (A3), cinquième (A5) et septième (A7) surfaces annulaires sur lesquelles le fluide de travail peut agir au niveau de la partie de commutation (3) vers la partie supérieure (5), et une première (A1), quatrième (A4) et sixième (A6) surfaces annulaires sur lesquelles le fluide de travail peut agir au niveau de la partie de commutation (3) vers la partie de base (4) en cas de liaison (V) fluidique permanente des premier (R1) et troisième (R3) espaces annulaires présentent les relations de grandeur suivants :

I. deuxième surface annulaire (A2) = troisième surface annulaire (A3) > 0,5 x première surface annulaire (A1) II. quatrième surface annulaire (A4) > cinquième surface annulaire (A5) + septième surface annulaire (A7) III. troisième surface annulaire (A3) + septième surface annulaire (A7) > quatrième surface annulaire (A4) + sixième surface annulaire (A6) IV. première surface annulaire (A1) = 2 x deuxième surface annulaire (A2) - quatrième surface annulaire (A4) + cinquième surface annulaire (A5) - sixième surface annulaire (A6) + septième surface annulaire (A7)

2. Moyen de commutation selon la revendication 1, **caractérisé en ce que** la partie de commutation (3) mobile dans le corps de soupape (2) est positionnée en fonction de la polarité d'alimentation (E1, E2) sur la base des relations de grandeur des première (A1), deuxième (A2), troisième (A3), quatrième (A4), cinquième (A5), sixième (A6) à septième (A7) surfaces annulaires sur lesquelles un fluide à haute pression peut agir au niveau de la partie de base (4) ou au niveau de la partie supérieure (5) et amène ainsi un guidage du fluide de travail dans la partie de commutation qui garantit une polarisation respectivement identique de l'alimentation et de l'évacuation (P, T) pour les consommateurs.

3. Moyen de commutation selon l'une quelconque des revendications 1 ou 2, **caractérisé en ce que** l'alimentation (P) en fluide de travail pour des consommateurs dans le corps de soupape est en liaison avec le quatrième espace annulaire (R4), lequel quatrième espace annulaire (R4) est positionné en direction axiale entre le premier (R1) et le deuxième (R2) espaces annulaires de l'éventuel pôle d'alimentation (E1, E2), et une position respective de la partie de commutation (3) garantit une liaison fluidique entre le pôle de haute pression ou le pôle d'alimentation (E1, E2) actuel et l'alimentation du consommateur (P), ainsi qu'une évacuation (T) vers le pôle de retour.

4. Moyen de commutation selon l'une quelconque des revendications 1 à 3, **caractérisé en ce que** le premier espace annulaire (R1) relié à un pôle d'alimentation (E1) présente la liaison (V) fluidique permanente dans le corps de soupape (2) avec le troisième espace annulaire (R3) entre le corps de soupape (2) et la partie de commutation (3).

5. Moyen de commutation selon l'une quelconque des revendications 1 à 4, **caractérisé en ce que** le deuxième espace annulaire (R2) relié à un pôle d'alimentation (E2) qui présente la première surface annulaire (A1) de la partie de commutation (3) pouvant être sollicitée vers la partie de base (4) lorsque la partie de commutation (3) est positionnée au niveau de la partie de base (4).

6. Moyen de commutation selon l'une quelconque des revendications 1 à 5, **caractérisé en ce que** le cinquième espace annulaire (R5) est formé pour l'évacuation (T) du fluide de travail du consommateur dans le corps de soupape (2), dans lequel la partie supérieure (5) fait saillie axialement avec un trou borgne (S) et radialement avec des alésages d'entrée (L) dans la paroi perforée, dans lequel le côté avant de la paroi perforée représente une limite de déplacement de la partie de commutation (3) tubulaire et la partie de commutation (3) garantit une liaison fluidique avec le premier (R1) ou le deuxième (R2) espace annulaire au moyen d'alésages radiaux (B1, B2) activés dans les positions finales, et donc dans le pôle de retour actuel.

7. Partie de commutation selon les revendications précédentes, **caractérisé en ce que** les espaces annulaires présentent la relation de grandeur suivante :

première surface annulaire (A1) = 1

deuxième surface annulaire (A2) = troisième surface annulaire (A3) $\approx$ 2/3 de la première surface annulaire (A1)

quatrième surface annulaire (A4) = 1,63 x première surface annulaire (A1)

cinquième surface annulaire (A5) = sixième surface annulaire (A6) $\approx$ 1/4 de la première surface annulaire (A1)

septième surface annulaire (A7) = 1,30 x première surface annulaire (A1)

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013037356 A1